(19) **Europäisches Patentamt / European Patent Office / Office européen des brevets**

(11) **EP 4 663 789 A1**

(12) **EUROPEAN PATENT APPLICATION**

(43) Date of publication:
**17.12.2025 Bulletin 2025/51**

(21) Application number: **25180323.5**

(22) Date of filing: **03.06.2025**

(51) International Patent Classification (IPC):
**C22C 21/00** (2006.01)   **C22F 1/04** (2006.01)
**H01M 50/119** (2021.01)   **C22C 1/02** (2006.01)
**H01M 50/342** (2021.01)

(52) Cooperative Patent Classification (CPC):
**C22C 21/00; C22C 1/026; C22F 1/04;
H01M 50/119; H01M 50/3425;** H01M 50/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.06.2024 KR 20240075336**

(71) Applicants:
• **SAMSUNG SDI CO., LTD.
Yongin-si, Gyeonggi-do 17084 (KR)**
• **Ulsan National Institute of Science and
Technology
(UNIST)
Eonyang-eup Ulju-gun
Ulsan 44919 (KR)**

(72) Inventors:
• **ROH, Heyoungcheoul
17084 Yongin-Si, Gyeonggi-do (KR)**
• **PARK, Sung Soo
44919 Ulsan (KR)**
• **KWON, Jaeho
44919 Ulsan (KR)**

(74) Representative: **Gulde & Partner
Patent- und Rechtsanwaltskanzlei mbB
Berliner Freiheit 2
10785 Berlin (DE)**

(54) **ALUMINUM ALLOY PLATE FOR CASE OF SECONDARY BATTERY AND METHOD FOR MANUFACTURING SAME**

(57) The present disclosure provides an aluminum alloy plate for a case (610) of a secondary battery. The aluminum alloy plate includes 1.25 wt% to 1.5 wt% of manganese (Mn), and 0.6 wt% to 0.8 wt% of magnesium (Mg).

FIG. 1

**Description**

**BACKGROUND**

**1. Field**

Aspects of embodiments of the present disclosure relate to an aluminum alloy plate for a safety vent and/or a case of a secondary battery and a method for manufacturing the same.

**2. Description of the Related Art**

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries are employed in various environments due to their excellent electrical properties. During the charging and discharging process of a secondary battery, pressure is generated inside a housing due to changes in chemical energy while ions move inside the secondary battery and transfer electrical energy, and thus the temperature may increase to approximately 80 °C. This temperature rise, often associated with thermal runaway of the secondary battery, may lead to the housing (case) breaking or being damaged by external impacts. Such damage can result in thermal propagation to adjacent modules, posing a risk of fire.

Therefore, there is an interest in the development of a case made from a high-strength aluminum alloy plate that maintains high strength at high temperatures and pressures, thereby ensuring an ideal safety vent rupture in the event of thermal runaway of the secondary battery.

The above information disclosed in this Background section is for enhancement of understanding of the background of the present disclosure, and therefore, it may contain information that does not constitute related (or prior) art.

**SUMMARY**

The invention is defined by the appended claims. The description that follows is subjected to this limitation. Any disclosure lying outside the scope of said claims is only intended for illustrative as well as comparative purposes.

In view of the above, embodiments of the present disclosure provide an aluminum alloy plate and a case of a secondary battery including the aluminum alloy plate.

The above information disclosed in this Background section is for enhancement of understanding of the background of the present disclosure, and therefore, it may contain information that does not constitute related (or prior) art.

Aspects of embodiments provide an aluminum alloy plate for a safety vent of a case and/or a case of a secondary battery, the aluminum alloy plate including 1.25 wt% to 1.5 wt% of manganese (Mn), and 0.6 wt% to 0.8 wt% of magnesium (Mg) (e.g., based on 100 wt% of the aluminum alloy plate).

According to one embodiment, the aluminum alloy plate may include 1.25 wt% to 1.5 wt% of manganese (Mn), and 0.7 wt% to 0.8 wt% of magnesium (Mg) (e.g., based on 100 wt% of the aluminum alloy plate).

According to one embodiment, the aluminum alloy plate may include 1.3 wt% to 1.35 wt% of manganese (Mn), and 0.7 wt% to 0.8 wt% of magnesium (Mg) (e.g., based on 100 wt% of the aluminum alloy plate).

According to one embodiment, the aluminum alloy plate may include 1.25 wt% to 1.5 wt% of manganese (Mn), and 0.7 wt% to 0.75 wt% of magnesium (Mg) (e.g., based on 100 wt% of the aluminum alloy plate).

According to one embodiment, the aluminum alloy plate may include 1.3 wt% to 1.35 wt% of manganese (Mn), and 0.7 wt% to 0.75 wt% of magnesium (Mg) (e.g., based on 100 wt% of the aluminum alloy plate).

According to one embodiment, the aluminum alloy plate may include 1.25 wt% of manganese (Mn), and 0.8 wt% of magnesium (Mg) (e.g., based on 100 wt% of the aluminum alloy plate).

According to one embodiment, the aluminum alloy plate may include 1.5 wt% of manganese (Mn), and 0.8 wt% of magnesium (Mg) (e.g., based on 100 wt% of the aluminum alloy plate).

According to one embodiment, the aluminum alloy plate may include 1.25 wt% of manganese (Mn), and 0.7 wt% of magnesium (Mg) (e.g., based on 100 wt% of the aluminum alloy plate).

According to one embodiment, the aluminum alloy plate may include 1.5 wt% of manganese (Mn), and 0.7 wt% of magnesium (Mg) (e.g., based on 100 wt% of the aluminum alloy plate).

According to one embodiment, the aluminum alloy plate described above may further include 0.01 wt% to 0.05 wt% of iron (Fe) (e.g., based on 100 wt% of the aluminum alloy plate).

According to one embodiment, the aluminum alloy plate described above may further include 0.01 wt% to 0.03 wt% of silicon (Si) (e.g., based on 100 wt% of the aluminum alloy plate).

According to one embodiment, the aluminum alloy plate described above may further include copper (Cu) exceeding 0.0 wt% and up to 0.01 wt% (e.g., based on 100 wt% of the aluminum alloy plate).

According to embodiments, a strain rate sensitivity index (m value) (e.g., of the aluminum alloy plate) may be 0.07 or higher, as defined by the following Equation 1, under conditions of a strain rate in a range from 0.0005 to 0.01 s$^{-1}$ and a temperature in a range from 190 °C to 210 °C:

$$m\ value = \frac{\partial log\sigma}{\partial log\dot{\varepsilon}}\ \text{(Equation 1)},$$

where $\dot{\varepsilon}$ is a strain rate (e. g. d$\varepsilon$/dt, unit: 1/s) and $\sigma$ is a flow stress (unit: MPa).

The m value may characterize the material's sensitivity to changes in deformation speed and may be evaluated in uniaxial tensile tests (uniaxial tensile testing) or compression tests performed at various constant strain rates and temperature as described above. The flow stress $\sigma$ may be recorded at a fixed strain level (e.g., 5 %) across these different rates. Strain level may refer to a specific amount of strain ($\varepsilon$) at which a material property - such as flow stress or the strain rate sensitivity index (m value) - is measured or evaluated during a mechanical test. It represents a defined point along the stress-strain curve, typically expressed as a percentage (e.g., 5% strain), and may be used to ensure consistency and comparability of test results across different strain rates or test conditions. Strain levels may refer to either total strain (elastic + plastic) or plastic strain only, depending on the context and the material behavior being studied. For purposes of determining the strain rate sensitivity index (m value), the logarithm of flow stress and strain rate may be mathematically treated. The calculation may be understood to involve a normalization to a reference value, thereby rendering the argument dimensionless. The strain rate sensitivity index may be determined by plotting the logarithm of the flow stress versus the logarithm of the strain rate. The slope of the resulting linear regression corresponds to the m value.

According to embodiments, the strain rate sensitivity index (m value) (e.g., of the aluminum alloy plate) may be 0.07 or higher, as defined by the following Equation 1, under conditions of a strain rate in a range from 0.0005 to 0.01 s$^{-1}$ and a temperature of 200 °C:

$$m\ value = \frac{\partial log\sigma}{\partial log\dot{\varepsilon}}\ \text{(Equation 1)},$$

where $\dot{\varepsilon}$ is a strain rate and $\sigma$ is a flow stress.

According to one embodiment, the wt% ratio of manganese (Mn) to magnesium (Mg) may be in a range from 1.5625:1 to 2.5:1.

Aspects of embodiments provide a secondary battery including the aluminum alloy plate described above.

According to one embodiment, the secondary battery described above may further include a case manufactured from the aluminum alloy plate. In other words, the case may include or consist of the aluminum alloy plate described above.

According to one embodiment, the secondary battery described above may further include a safety vent manufactured from the aluminum alloy plate. In other words, the safety vent may include or consist of the aluminum alloy plate described above.

Aspects of embodiments provide a method for manufacturing an aluminum alloy plate for a safety vent and/or a case of a secondary battery, the method including: a first act of melting an aluminum alloy; a second act of casting the molten aluminum alloy; and a third act of solution treating the cast aluminum alloy. Further, the aluminum alloy includes, based on the total weight, 1.25 wt% to 1.5 wt% of manganese (Mn) and 0.6 wt% to 0.8 wt% of magnesium (Mg).

According to one embodiment, the aluminum alloy may include, based on the total weight, 1.25 wt% to 1.5 wt% of manganese (Mn) and 0.7 wt% to 0.8 wt% of magnesium (Mg).

According to one embodiment, the first act may include melting the aluminum alloy and individually adding the manganese (Mn) and magnesium (Mg). For example, the first act may include melting aluminum containing iron, silicon, and other incidental impurities, and then individually adding the manganese (Mn) and magnesium (Mg).

According to one embodiment, the method described above may further include a fourth act of hot rolling the solution-treated aluminum alloy to produce a plate.

According to one embodiment, the method described above may further include a fifth act of cold rolling the solution-treated aluminum alloy to produce a plate.

According to one embodiment, the method described above may further include a sixth act of annealing the plate.

According to one embodiment, the first act may include heating the aluminum alloy to a temperature in a range from 700 °C to 780 °C.

According to one embodiment, the first act may include maintaining the aluminum alloy, after adding the manganese and the magnesium, at a temperature in a range from 750 °C to 780 °C for 20 minutes.

According to one embodiment, the manganese and the magnesium may be added in the form of pure substances or master alloys. In other words, the method may include an adding of the manganese and the magnesium, e. g. during or before the first act, wherein the added manganese and the magnesium are pure substances or master alloys.

According to one embodiment, the third act may include solution treating the cast aluminum alloy at a temperature in a range from 530 °C to 620 °C for 6 to 8 hours.

According to one embodiment, the fourth act may include preheating the solution-treated aluminum alloy to a temperature in a range from 300 °C to 450 °C for 1 hour.

According to one embodiment, the hot rolling in the fourth act may have a rolling reduction ratio of 10%.

The rolling reduction ratio in rolling (e. g. hot and/or cold rolling) may refer to the ratio between an initial thickness of a workpiece, e. g. the solution-treated aluminum alloy, before rolling and its final thickness after rolling. The reduction ratio R may be expressed as

$$R = \frac{h_0}{h_1} \text{ (Equation 2.1),}$$

where $h_0$ is the initial thickness and $h_1$ is the final thickness after rolling. Alternatively, it can be represented as a percentage of thickness reduction

$$R(\%) = \frac{(h_0 - h_1)}{h_0} * \ 100 \text{ (Equation 2.2).}$$

According to one embodiment, the cold rolling in the fifth act may have a rolling reduction ratio of 20%.

According to one embodiment, the sixth act may include heat treating the plate at a temperature in a range from 300 °C to 450 °C.

According to some embodiments of the present disclosure, it is possible to provide a high-strength aluminum alloy plate that maintains high strength at high temperatures and pressures while ensuring formability and weldability. This high-strength aluminum alloy plate can lead to improved or ideal safety vent rupture during thermal runaway of the secondary battery.

According to some embodiments of the present disclosure, by determining an improved or optimized content ratio of Mn and Mg, which can affect room temperature strength and high-temperature dislocation movement as a solid-solution element, it is possible to provide an aluminum alloy plate that achieves weldability comparable to that of AA3005 and high-temperature properties and formability comparable to those of AA3104.

According to some embodiments of the present disclosure, it is possible to provide the secondary battery capable of suitably or adequately controlling the rupture of the safety vent of the case of the secondary battery in the event of thermal runaway of the secondary battery.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

**BRIEF DESCRIPTION OF DRAWINGS**

The following drawings attached to this specification illustrate embodiments of the present disclosure, and further describe aspects and features of the present disclosure together with the detailed description of the present disclosure. Thus, the present disclosure should not be construed as being limited to the drawings:

FIG. 1 is a pair of charts illustrating properties of aluminum alloy plates according to embodiments of the present disclosure.

FIG. 2 is a chart illustrating a strain rate sensitivity index.

FIGS. 3-5 are charts illustrating strain rate sensitivity indexes of aluminum alloy plates according to embodiments of the present disclosure.

FIG. 6 is a perspective view illustrating a secondary battery according to one embodiment of the present disclosure.

FIG. 7 is a flowchart illustrating an example of a method for manufacturing an aluminum alloy plate according to one embodiment of the present disclosure.

FIG. 8 illustrates an example of a rolling method according to one embodiment of the present disclosure.

## DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The recitation of a particular numerical value or a value range used in this specification is understood to include potential errors that may occur, for example, due to unintended impurities and/or measurement tolerances.

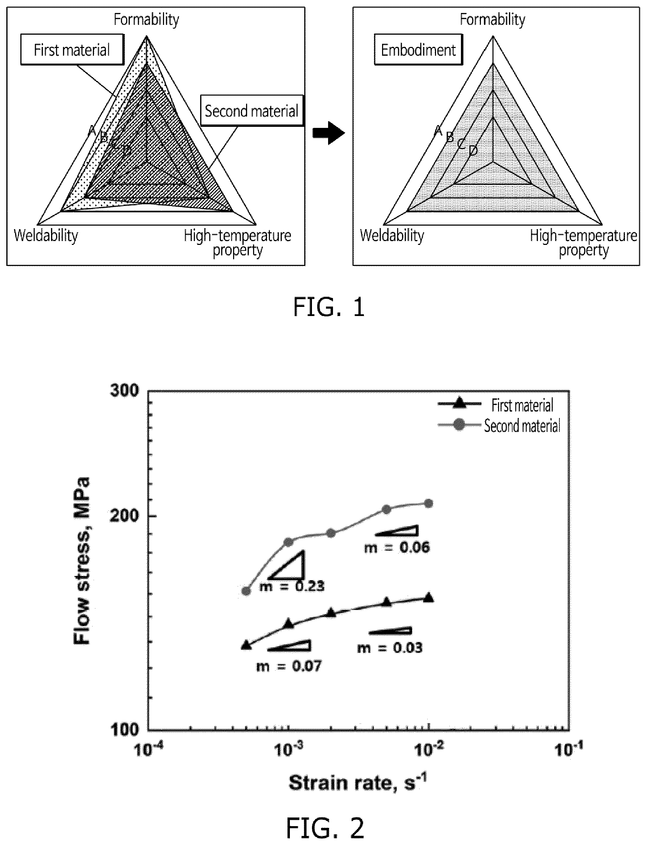

FIG. 1 is a pair of charts illustrating properties of aluminum alloy plates according to embodiments of the present disclosure.

The left-hand diagram of FIG. 1 shows a property triangle used to compare a first material and a second material based on three key characteristics: formability, weldability, and high-temperature properties. Each corner of the triangle represents one of these properties in its maximum form. Inside the triangle, a set of concentric, triangular lines labeled A, B, C, and D indicate different levels of performance - similar to contour lines on a map. Line D, closest to the center, represents a low level of each property, while line A, the outermost, stands for the highest level. Each material is represented by a triangular area within this framework, formed by connecting its performance values along the three axes. This area visually summarizes how the material performs across all three dimensions. The larger and more balanced the area, the more versatile the material tends to be.

Comparing the two materials, the first material extends more toward the formability axis, indicating it is especially good at being formed or shaped. The second material, on the other hand, particularly stretches toward high-temperature performance.

The right-hand diagram of FIG. 1 shows a property triangle of an aluminum alloy plate according to an embodiment. The embodiment shown in the right-hand diagram represents an improved aluminum alloy plate with respect to formability, weldability, and high-temperature property. Its property triangle lies mostly between contour lines A and B, indicating a high-performance level across all three criteria. It shows a balanced distribution, suggesting that this embodiment offers a well-rounded performance profile. In comparison to the first material from the first diagram, the embodiment is more balanced. It clearly provides better overall thermal performance and weldability, making it more suitable for applications requiring a broader range of capabilities. Compared to the second material, the embodiment offers a more uniform property distribution. It clearly provides better weldability.

Therefore, according to some embodiments of this disclosure, an aluminum alloy plate can be provided that secures weldability comparable to AA3005 (first material) and high-temperature properties and formability comparable to AA3104 (second material).

In a secondary battery where charging and discharging are repeatedly performed, a housing material of the secondary battery may be continuously exposed to an internally generated pressure and an increased temperature around 80 °C. If a separator inside the secondary battery is damaged by an external impact, the thermal runaway caused by a short circuit may lead to the housing breaking and thermal propagation to adjacent battery modules, thereby posing a risk of fire.

To avoid this risk, AA3003, AA3005, and/or AA3104 aluminum alloy may be used as the material for the case (or housing) of the secondary battery. The 3000 series (Al-Mn series) aluminum alloy may provide superior formability and weldability at room temperature compared to other aluminum alloy series.

Among the compositions of aluminum alloys, manganese (Mn) may be dissolved in an aluminum matrix to enhance the strength of the alloy. However, if (e.g., when) excessive amounts of Mn are present, manganese may combine with impurities such as Fe and Si to form unintended intermetallic compounds, such as Al-(Fe, Mn)-Si and/or $Al_6$(Fe, Mn). These compounds may adversely affect formability. Further, these intermetallic compounds may evaporate or melt during welding of the aluminum alloy, thereby causing defects.

Among the compositions of aluminum alloys, magnesium (Mg) may be dissolved in an aluminum matrix to enhance the strength of the alloy. However, if (e.g., when) the magnesium content exceeds 1 wt%, it may lead to the formation of numerous internal porosity defects in the alloy due to the element's inherent high vapor pressure. These porosity defects may also cause spatter, thereby resulting in an uneven surface on the product, which can complicate subsequent processing and painting.

Among the compositions of aluminum alloys, iron (Fe) and silicon (Si) are generally unintended impurities that may be introduced from raw materials and/or the surrounding environment during the manufacturing process. If (e.g., when) excessive amounts of Fe and Si are present, unintended intermetallic compounds such as Al-(Fe, Mn)-Si and $Al_6$ (Fe, Mn) may be formed, and these compounds may adversely affect formability of the alloy.

AA3003 aluminum alloy may include compositions (in % by weight) of 96.8 wt% to 98.9 wt% of aluminum (Al), 1.0 wt% to 1.5 wt% of manganese (Mn), and small amounts of iron (Fe) and silicon (Si) (e.g., based on 100 wt% of the aluminum alloy). AA3003 aluminum alloy may provide higher strength and excellent corrosion resistance compared to pure aluminum, with particular resistance to corrosion in atmospheric and marine environments. These properties are due to its excellent formability and machinability.

AA3005 aluminum alloy may include compositions (in % by weight) of 95.7 wt% to 98.8 wt% of aluminum (Al), 1.0 wt% to 1.5 wt% of manganese (Mn), 0.2 wt% to 0.6 wt% of magnesium (Mg), and small amounts of iron (Fe) and silicon (Si) (e.g., based on 100 wt% of the aluminum alloy). AA3005 aluminum alloy may provide excellent corrosion resistance and has slightly higher strength compared to AA3003.

AA3014 aluminum alloy may include compositions (in % by weight) of 95.1 wt% to 98.4 wt% of aluminum (Al), 0.8 wt% to 1.4 wt% of manganese (Mn), 0.8 wt% to 1.3 wt% of magnesium (Mg), and small amounts of iron (Fe) and silicon (Si) (e.g., based on 100 wt% of the aluminum alloy). AA3014 aluminum alloy may provide excellent corrosion resistance and higher strength, retaining its strength particularly well after cold working. For example, AA3104 aluminum alloy shows superior high-temperature performance compared to AA3005 due to its higher strength, particularly in resisting short-side rupture during thermal runaway in battery applications. However, the increased magnesium (Mg) content in AA3104 results in reduced weldability.

Accordingly, according to some embodiments of the present disclosure, by determining an improved or optimized content ratio of Mn and Mg, which can affect room temperature strength and high-temperature dislocation movement as a solid-solution element, it is possible to provide an aluminum alloy plate that achieves weldability comparable to that of AA3005 and high-temperature properties and formability comparable to those of AA3104.

FIG. 2 is a chart illustrating a strain rate sensitivity index.

Although there is extensive data on tensile test results of 3000-series aluminum alloys at room temperature, there is a lack of data on evaluation results of the properties of aluminum alloys in high-temperature environments. Therefore, a method that evaluates high-temperature properties of 3000-series aluminum alloys is not well established. The present disclosure introduces a new method that accurately evaluates the deformation characteristics of 3000-series aluminum alloys in high-temperature environments by including the use of the strain rate sensitivity index (m value).

The strain rate sensitivity index is defined as follows:

Equation 1

$$m\ value = \frac{\partial log\sigma}{\partial log\varepsilon}\ (\dot{\varepsilon}:\ \text{strain rate},\ \sigma:\ \text{flow stress}).$$

As the strain rate ($\dot{\varepsilon}$) increases, the diffusion of solute elements located in the dislocation core may become more challenging. This makes dislocation movement more difficult and enhances the strength of the material. The strain rate sensitivity may increase when suitably or appropriately sized solute elements are placed in the dislocation core within the aluminum matrix. The strain rate sensitivity index (m value), which is defined in Equation 1, represents the ratio of the flow stress ($\sigma$) to the strain rate ($\dot{\varepsilon}$).

Therefore, a higher strain rate sensitivity index (m value) indicates greater resistance to non-uniform deformation of the material in high-temperature environments, which implies enhanced stability at high temperatures.

For example, referring to FIG. 2, a first material (AA3005) shows a strain rate sensitivity index in a range from 0.03 to 0.07 under conditions of a strain rate range of 0.0005 to 0.01 $s^{-1}$ and a heating temperature of 200 °C. In contrast, a second material (AA3104) shows a strain rate sensitivity index in a range from 0.06 to 0.23 under the same conditions of the strain rate range of 0.0005 to 0.01 $s^{-1}$ and the heating temperature of 200 °C. This indicates that the second material (AA3104) has higher stability at high temperatures compared to the first material (AA3005).

According to some embodiments of the present disclosure, the present disclosure contributes to the development of alloys that exhibit stable performance even in high-temperature environments by evaluating the properties of 3000-series aluminum alloys at high temperatures using the strain rate sensitivity index. In embodiments, such an evaluation method may enhance the understanding of high-temperature characteristics of 3000-series aluminum alloys, thereby expanding their applicability in various suitable high-temperature applications.

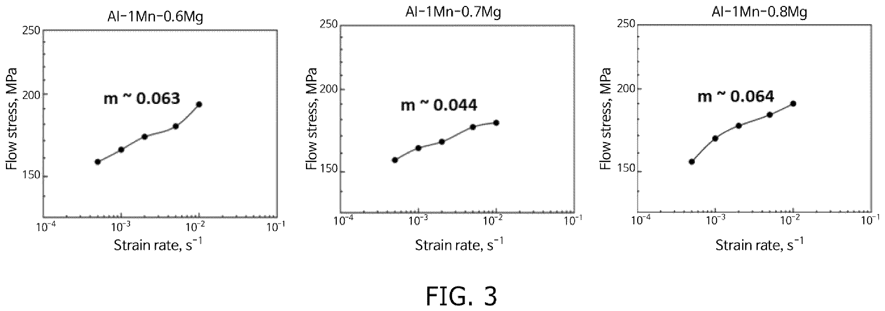

FIGS. 3-5 are charts illustrating strain rate sensitivity indexes of aluminum alloy plates according to embodiments of the present disclosure.

The aluminum alloy plate for a safety vent and/or a case of a secondary battery according to one embodiment of the present disclosure may include 1.25 wt% to 1.5 wt% of manganese (Mn) and 0.6 wt% to 0.8 wt% of magnesium (Mg) relative to the total weight of the aluminum alloy, with the balance being aluminum (Al) and incidental impurities (e.g., based on 100 wt% of the aluminum alloy plate). Magnesium (Mg) and manganese (Mn) may be added in the form of pure substances or master alloys. In embodiments, the wt% ratio of manganese to magnesium may range from 1.5625:1 to 2.5:1. Unless otherwise indicated, wt% used in this specification may refer to a value relative to the total weight of the aluminum alloy (e.g., based on 100 wt% of the aluminum alloy).

In the aluminum alloy plate according to embodiments of the present disclosure, iron (Fe), which is an impurity contained in aluminum, may be included in an amount in a range from 0.01 wt% to 0.05 wt% to prevent or reduce excessive crystalline phase formation with manganese.

Silicon (Si), which is an impurity contained in aluminum, may be included in an amount in a range from 0.01 wt% to 0.03 wt%.

Copper (Cu) may reduce the substantial proportion of magnesium (Mg) available in the aluminum matrix by combining with magnesium (Mg). Therefore, individual addition may be avoided, and copper may be included in an amount greater than 0.0 wt% but not exceeding 0.01 wt%.

Hereinafter, embodiments of the present disclosure and comparative examples will be described. However, the following embodiments are only examples of the present disclosure and are not intended to limit the scope of the present disclosure thereto.

**First embodiment**

An aluminum alloy plate was prepared by mixing compositions of an aluminum alloy including (in % by weight) 1.25 wt% of manganese (Mn) and 0.6 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

**Second embodiment**

An aluminum alloy plate was prepared by mixing compositions of an aluminum alloy including (in % by weight) 1.25 wt% of manganese (Mn) and 0.7 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

**Third embodiment**

An aluminum alloy plate was prepared by mixing compositions of an aluminum alloy including (in % by weight) 1.25 wt% of manganese (Mn) and 0.8 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

**Fourth embodiment**

An aluminum alloy plate was prepared by mixing compositions of an aluminum alloy including (in % by weight) 1.5 wt% of manganese (Mn) and 0.6 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

**Fifth embodiment**

An aluminum alloy plate was prepared by mixing compositions of an aluminum alloy including (in % by weight) 1.5 wt% of manganese (Mn) and 0.7 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

**Sixth embodiment**

An aluminum alloy plate was prepared by mixing compositions of an aluminum alloy including (in % by weight) 1.5 wt% of manganese (Mn) and 0.8 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

**First comparative example**

An aluminum alloy plate was prepared by mixing compositions of an aluminum alloy including (in % by weight) 1.0 wt% of manganese (Mn) and 0.6 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

**Second comparative example**

An aluminum alloy plate was prepared by mixing compositions of an aluminum alloy including (in % by weight) 1.0 wt% of manganese (Mn) and 0.7 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

**Third comparative example**

An aluminum alloy plate was prepared by mixing compositions of an aluminum alloy including (in % by weight) 1.0 wt% of manganese (Mn) and 0.8 wt% of magnesium (Mg), incidental impurities (0.05 wt% or less of iron (Fe), 0.03 wt% or less of silicon (Si), and 0.01 wt% or less of copper (Cu)), and the balance being aluminum (Al).

The compositions of the aluminum alloys prepared according to the first to third comparative examples, the first to sixth embodiments, and the first and second materials are shown in Table 1.

Table 1

| Classification | Alloying elements, wt% | | | | | |
|---|---|---|---|---|---|---|
| | Mn | Mg | Fe | Si | Cu | Al |
| 1st comparative example | 1 | 0.6 | ≤ 0.05 | ≤ 0.03 | - | balance |
| 2nd comparative example | 1 | 0.7 | | | | |
| 3rd comparative example | 1 | 0.8 | | | | |
| 1st embodiment | 1.25 | 0.6 | | | | |
| 2nd embodiment | 1.25 | 0.7 | | | | |
| 3rd embodiment | 1.25 | 0.8 | | | | |
| 4th embodiment | 1.5 | 0.6 | | | | |
| 5th embodiment | 1.5 | 0.7 | | | | |
| 6th embodiment | 1.5 | 0.8 | | | | |
| 1st material (AA3005) | 1.2 | 0.5 | 0.5 | 0.2 | 0.2 | |
| 2nd material (AA3104) | 0.8 | 1.0 | 0.5 | 0.2 | 0.1 | |

Additionally, the strain rate sensitivity index (m value) of each of the aluminum alloys manufactured according to the first to third comparative examples, the first to sixth embodiments, and the first and second materials, under the conditions of a strain rate range of 0.0005 to 0.01 s$^{-1}$ and a heating temperature of 200 °C, is shown in Table 2.

Table 2

| Classification | Flow stress as a function of strain rate, MPa | | | | | |
|---|---|---|---|---|---|---|
| strain rate (s$^{-1}$) | 0.0005 | 0.001 | 0.002 | 0.005 | 0.01 | m value |
| 1st comparative example | 158 | 165 | 172 | 179 | 193 | 0.063 |
| 2nd comparative example | 156 | 163 | 167 | 175 | 178 | 0.044 |
| 3rd comparative example | 155 | 168 | 176 | 183 | 190 | 0.064 |
| 1st embodiment | 160 | 166 | 178 | 186 | 201 | 0.075 |

(continued)

| Classification | Flow stress as a function of strain rate, MPa | | | | | |
|---|---|---|---|---|---|---|
| strain rate ($s^{-1}$) | 0.0005 | 0.001 | 0.002 | 0.005 | 0.01 | m value |
| 2nd embodiment | 165 | 173 | 187 | 197 | 205 | 0.075 |
| 3rd embodiment | 162 | 174 | 184 | 202 | 212 | 0.091 |
| 4th embodiment | 166 | 177 | 179 | 192 | 200 | 0.060 |
| 5th embodiment | 166 | 188 | 193 | 209 | 213 | 0.080 |
| 6th embodiment | 167 | 184 | 198 | 203 | 217 | 0.081 |
| 1st material (AA3005) | 136 | 139 | 142 | 151 | 148 | 0.033 |
| 2nd material (AA3104) | 149 | 170 | 178 | 198 | 208 | 0.092 |

Referring to FIG. 3, Table 1, and Table 2, it was found that, in the case of the first to third comparative examples, the strain rate sensitivity index (m value) was less than 0.07, indicating lower stability at high temperatures compared to the first to sixth embodiments.

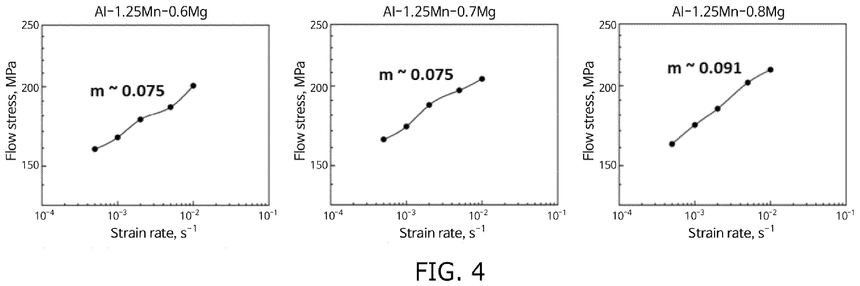

Referring to FIG. 4, Table 1, and Table 2, it was found that, in the case of the first to third embodiments, the strain rate sensitivity index (m value) was 0.07 or higher in all ranges where the weight percent (wt%) of magnesium (Mg) was between 0.6 wt% and 0.8 wt%. In particular, the third embodiment exhibited the highest strain rate sensitivity index (m value) comparable to that of the second material (AA3104).

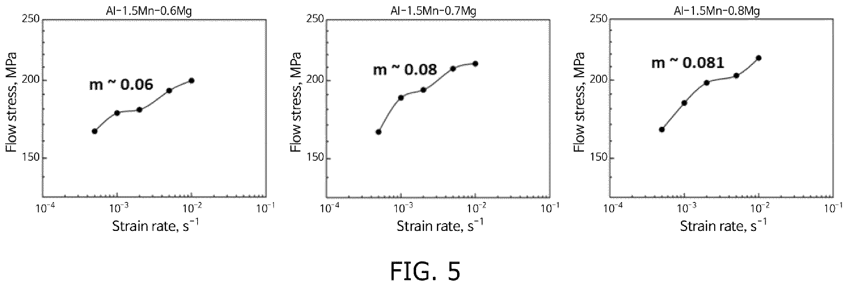

Referring to FIG. 5, Table 1, and Table 2, it was found that, in the case of the fourth to sixth embodiments, the strain rate sensitivity index (m value) was 0.07 or higher in all ranges where the weight percent (wt%) of magnesium (Mg) was between 0.7 wt% and 0.8 wt%. However, in the case where the weight percent (wt%) of magnesium (Mg) was 0.6 wt%, the sensitivity index (m value) dropped below 0.07.

The aluminum alloy according to one embodiment may include manganese (Mn) and magnesium (Mg) in the range of 1.25 wt% to 1.5 wt% of Mn and 0.6 wt% to 0.8 wt% of Mg, in % by total weight of the aluminum alloy (e.g., based on 100 wt% of the aluminum alloy), to satisfy the condition that the strain rate sensitivity index (m value) is 0.07 or higher.

According to the first to third embodiments and the fifth and sixth embodiments of the present disclosure in which the strain rate sensitivity index (m value) is 0.07 or higher, it is possible to provide a high-strength aluminum alloy plate that maintains high strength at high temperatures and pressures while ensuring formability and weldability. This high-strength aluminum alloy plate can lead to improved or ideal safety vent rupture during thermal runaway of the secondary battery.

In one embodiment, in order to achieve the strain rate sensitivity index (m value) of 0.07 or higher, the aluminum alloy may include (in % by total weight) 1.25 wt% of manganese (Mn) and 0.6 wt% to 0.8 wt% of magnesium (Mg) (e.g., based on 100 wt% of the aluminum alloy).

In one embodiment, in order to achieve the strain rate sensitivity index (m value) of 0.07 or higher, the aluminum alloy may include (in % by total weight) 1.5 wt% of manganese (Mn) and 0.7 wt% to 0.8 wt% of magnesium (Mg) (e.g., based on 100 wt% of the aluminum alloy).

In one embodiment, in order to achieve the strain rate sensitivity index (m value) of 0.07 or higher, the aluminum alloy may include (in % by total weight) 1.25 wt% to 1.5 wt% of manganese (Mn) and 0.7 wt% to 0.8 wt% of magnesium (Mg) (e.g., based on 100 wt% of the aluminum alloy).

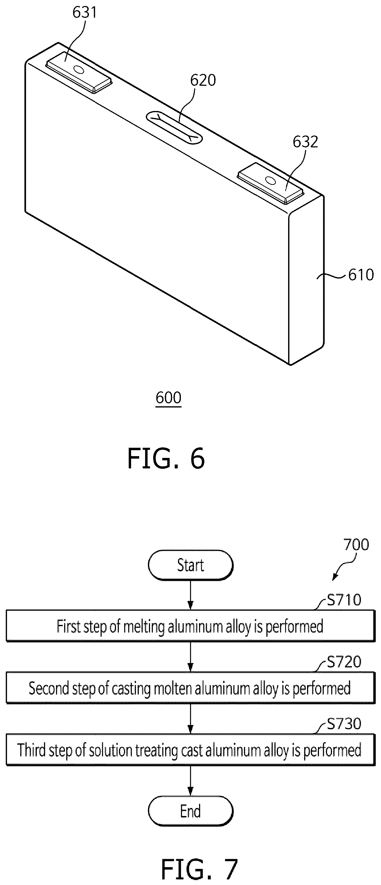

FIG. 6 is a perspective view illustrating a secondary battery according to one embodiment of the present disclosure.

Referring to FIG. 6, the secondary battery 600 according to one embodiment of the present disclosure may include an aluminum alloy plate according to one embodiment of the present disclosure. For example, the secondary battery 600 may include an electrode assembly for charging and discharging, a case 610 housing the electrode assembly and including the aluminum alloy plate, first and second electrode terminals 631 and 632 connected to the electrode assembly and a safety vent 620 .

The electrode assembly may include a positive electrode, a negative electrode, and a separator interposed between the positive and negative electrodes. Further, the positive electrode, the negative electrode, and the separator may be impregnated with an electrolyte. The electrode assembly may also include electrode tabs, such as a positive tab and a negative tab, which serve as electrical pathways that direct electrical current to the outside.

In one embodiment, the positive electrode and the negative electrode may each include a current collector (or substrate) formed of a thin metal foil, which includes a coated portion where an active material is applied and an uncoated portion where no active material is applied. The positive and negative electrodes may be wound with the separator, which is an insulating material (e.g., an electrically insulating material), interposed between the positive and negative electrodes. In this embodiment, the negative electrode is made of copper (Cu), while the positive electrode is made of aluminum (Al).

The case 610 may form the overall appearance of the secondary battery 600 and may be formed from an aluminum alloy plate. The aluminum alloy plate may correspond to the aluminum alloy plate for the case of the secondary battery described with reference to FIGS. 1-5.

In embodiments, the case 610 may provide a space for accommodating the electrode assembly. For example, in a case where the secondary battery 600 is a prismatic battery, the case 610 may have a shape of a rectangular can.

For the purpose of explaining embodiments of the present disclosure, the case 610 is shown in FIG. 6 as having the shape of a prismatic battery. However, the scope of the present disclosure is not limited thereto and may include various suitable shapes of secondary batteries, such as the shape of a pouch battery, the shape of a coin battery, and/or the like.

The secondary battery 600 may include a cap plate that covers an opening of the case 610. The cap plate may be made of a thin plate that may be coupled to the opening of the case 610. The cap plate may include an electrolyte injection port, which may be equipped with a sealing stopper, and a safety vent 620 having a notch. The safety vent 620 may allow exhaust gases generated inside the secondary battery 600 under abnormal operating conditions, such as thermal runaway and/or thermal event, to be discharged to the outside of the secondary battery 600.

The secondary battery 600 according to embodiments of the present disclosure may be applied to automobiles, mobile phones, and/or various suitable types or kinds of electrical devices. However, the scope of the present disclosure is not limited thereto.

According to some embodiments of the present disclosure, the safety vent 620 of the secondary battery 600 may be manufactured from the aluminum alloy plate described in the embodiments of the present disclosure. When the safety vent 620 is made of the aluminum alloy plate described in the embodiments of the present disclosure, the rupture of the safety vent 620 of the case of the secondary battery may be adequately controlled in the event of thermal runaway of the secondary battery.

FIG. 7 is a flowchart illustrating an example of a method for manufacturing an aluminum alloy plate according to one embodiment of the present disclosure.

A method 700 for manufacturing an aluminum alloy plate may begin with a first act (e.g., active act or step) of melting an aluminum alloy (step S710). For example, the first act may include melting aluminum containing iron, silicon, and other incidental impurities, and then individually adding alloying elements. The alloying elements may include 1.25 wt% to 1.5 wt% of manganese (Mn) and 0.6 wt% to 0.8 wt% of magnesium (Mg), based on the total weight of the aluminum alloy (e.g., based on 100 wt% of the aluminum alloy). The balance of the aluminum alloy may consist of aluminum (Al) and incidental impurities.

In one embodiment, the process of melting aluminum may include heating the aluminum alloy to a temperature in a range from 700 °C to 780 °C. For example, the process of melting aluminum may include heating the aluminum alloy to a temperature in a range from 700 °C to 780 °C while concurrently (e.g., simultaneously) stirring the aluminum alloy to ensure that the alloying elements are suitably or properly distributed within an aluminum matrix.

In one embodiment, the first act may include maintaining the temperature at 750 °C to 780 °C for 20 minutes after adding manganese and magnesium. This process allows manganese and magnesium to dissolve effectively into the aluminum matrix, forming a solid solution and promoting the homogenization of the aluminum alloy. In embodiments, this process helps to eliminate or reduce residual stresses that may otherwise occur during the alloy manufacturing process, thereby enhancing the mechanical stability of the alloy.

Subsequently, a second act of casting the molten aluminum alloy may be performed (step S720). The molten aluminum alloy may be cast into various suitable shapes and thicknesses according to the selection of those skilled in the art. In embodiments, the rate and method of pouring the molten aluminum alloy for casting may follow standard processes for manufacturing aluminum alloys in the art.

Thereafter, a third act of solution treating the cast aluminum alloy may be performed (step S730). For example, the third act may include solution treating the cast aluminum alloy at a temperature in a range from 530 °C to 620 °C for a period of 6 to 8 hours. The third act allows for suitable or sufficient dissolution of the compositions added in the slab prior to rolling, and homogenizes the internal stresses and composition to improve or optimize the mechanical properties of the aluminum alloy.

The method 700 for manufacturing the aluminum alloy plate according to one embodiment may further include a fourth act of hot rolling the solution-treated aluminum alloy to produce a plate (step S740, not shown). Additionally or alternatively, the method 700 for manufacturing the aluminum alloy plate may include a fifth act of cold rolling the solution-treated aluminum alloy to produce the plate (step S750, not shown).

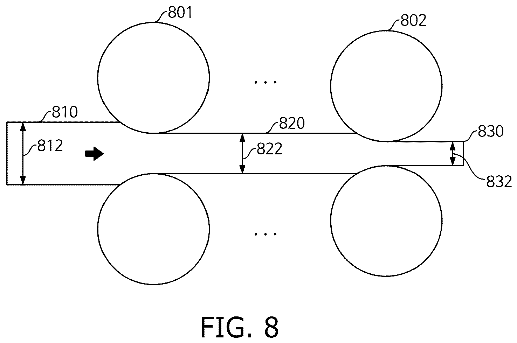

In one embodiment, a plurality of rolling processes may be performed between the fourth act of hot rolling the aluminum alloy and the fifth act of cold rolling the aluminum alloy, depending on the selection by those skilled in the art. For example, the method 700 for manufacturing the aluminum alloy plate according to one embodiment may perform only one selected from among the hot rolling process and the cold rolling process, or may perform both the hot rolling process and the cold rolling process in any order. Each rolling process will be described further with respect to FIG. 8.

The method 700 for manufacturing the aluminum alloy plate according to one embodiment may further include a sixth act of annealing the plate (step S760). For example, the sixth act may include heat treating the plate at a temperature in a range from 300 °C to 450 °C.

FIG. 8 illustrates an example of a rolling method according to one embodiment of the present disclosure.

Referring to FIG. 8, a method for manufacturing an aluminum alloy plate according to one embodiment may include a process of producing a plate (or sheet) by either hot rolling (the fourth act) or cold rolling (the fifth act) of the solution-treated aluminum alloy. For example, the aluminum alloy may be hot rolled from a solution-treated slab to produce a first plate, which can then be further cold rolled to produce a second plate.

In one embodiment, the hot rolling process (the fourth act) may include preheating the solution-treated aluminum alloy to a temperature in a range from 300 °C to 450 °C for 1 hour. Thereafter, if necessary or desired, a process of performing intermediate heat treatment at a temperature of 350 °C may be included during the hot rolling process to eliminate excessive deformation.

The cold rolling process (the fifth act) may be performed to more precisely adjust the properties such as the thickness and surface finish of the slab and/or the hot-rolled first plate. This process may be conducted using rolling mills such as a tandem rolling mill (TRM) and/or a Sendzimirrolling Mill (ZRM).

In embodiments, a first roller 801 and a second roller 802 may refer to two rollers that are spaced apart from each other. In embodiments, the arrangement of the first roller 801 and the second roller 802 may vary depending on the type or kind of rolling mill. Although FIG. 8 illustrates an example in which two rollers 801 and 802 are used, a plurality of rollers may be used as needed.

The first roller 801 may roll the solution-treated slab 810 (e. g. the solution-treated aluminum alloy) to produce the first plate 820. In one embodiment, the hot rolling process may have a rolling reduction ratio of 10%. For example, a thickness 822 of the first plate 820, which is produced by hot rolling the slab 810 heated to 350 °C, may be 90% of a thickness 812 of the slab 810. In one embodiment, a thickness of the solution-treated aluminum alloy plate may be reduced to a suitable or required thickness by using a plurality of rollers having a reduction ratio of 10% in the hot rolling process.

The second roller 802 may roll the first plate 820 to produce the second plate 830. In one embodiment, the cold rolling process may have a rolling reduction ratio of 20%. For example, a thickness 832 of the second plate 830, produced by cold rolling the first plate 820 at room temperature, may be 80% of a thickness 822 of the first plate 820. In one embodiment, a thickness of the solution-treated aluminum alloy plate may be reduced to a required or desired thickness by using a plurality of rollers having a reduction ratio of 20% in the cold rolling process.

Although the present disclosure has been described above with respect to embodiments thereof, the present disclosure is not limited thereto. Various modifications and variations can be made thereto by those skilled in the art within the equivalent scope of the appended claims.

## DESCRIPTION OF SOME REFERENCE SYMBOLS

600: secondary battery
610: case of secondary battery
620: safety vent
631: first electrode terminal
632: second electrode terminal

## Claims

1. An aluminum alloy plate for a case (610) of a secondary battery (600), comprising:

   1.25 wt% to 1.5 wt% of manganese (Mn); and
   0.6 wt% to 0.8 wt% of magnesium (Mg).

2. The aluminum alloy plate as claimed in claim 1, comprising:
   0.7 wt% to 0.8 wt% of magnesium (Mg).

3. The aluminum alloy plate as claimed in claim 1 or 2, further comprising: 0.01 wt% to 0.05 wt% of iron (Fe).

4. The aluminum alloy plate as claimed in any one of claims 1 to 3, further comprising: 0.01 wt% to 0.03 wt% of silicon (Si).

5. The aluminum alloy plate as claimed in any one of claims 1 to 4, further comprising: copper (Cu) exceeding 0.0 wt% and up to 0.01 wt%.

6. The aluminum alloy plate as claimed in any one of claims 1 to 5, wherein a strain rate sensitivity index (m value) of the aluminum alloy plate is 0.07 or higher, as defined by the following Equation 1, under conditions of a strain rate in a range from 0.0005 to 0.01 s$^{-1}$ and a temperature of 200 °C:

$$m\ value = \frac{\partial log\sigma}{\partial log\dot{\varepsilon}}\ \text{(Equation 1)},$$

where $\dot{\varepsilon}$ is a strain rate and $\sigma$ is a flow stress.

7. The aluminum alloy plate as claimed in any one of claims 1 to 6, wherein the wt% ratio of manganese (Mn) to magnesium (Mg) is in a range from 1.5625:1 to 2.5:1.

8. A secondary battery (600) comprising the aluminum alloy plate as claimed in any one of claims 1 to 7.

9. The secondary battery (600) as claimed in claim 8, further comprising a safety vent (620) and/or a case (610) manufactured from the aluminum alloy plate.

10. A method (700) for manufacturing an aluminum alloy plate for a case (610) of a secondary battery (610), the method (700) comprising:

    a first act (S710) of melting an aluminum alloy;
    a second act (S720) of casting the molten aluminum alloy;
    a third act (S730) of solution treating the cast aluminum alloy,
    wherein the aluminum alloy comprises, based on the total weight of the aluminum alloy, 1.25 wt% to 1.5 wt% of manganese (Mn) and 0.6 wt% to 0.8 wt% of magnesium (Mg).

11. The method (700) as claimed in claim 10, further comprising a fourth act of hot rolling the solution-treated aluminum alloy to produce a plate, and/or further comprising a fifth act of cold rolling the solution-treated aluminum alloy to produce a plate.

12. The method (700) as claimed in claim 10 or 11, further comprising a sixth act of annealing the plate.

13. The method (700) as claimed in any one of claims 10 to 12, wherein the first act comprises heating the aluminum alloy to a temperature ranging from 700 °C to 780 °C.

14. The method (700) as claimed in any one of claims 10 to 13, wherein the first act comprises maintaining the aluminum alloy, after adding the manganese and the magnesium, at a temperature in a range from 750 °C to 780 °C for 20 minutes.

15. The method (700) as claimed in any one of claims 10 to 14, wherein the third act comprises solution treating the cast aluminum alloy at a temperature in a range from 530 °C to 620 °C for 6 to 8 hours.

FIG. 1

FIG. 2

FIG. 3

FIG. 4

FIG. 5

631

620

632

610

600

# FIG. 6

700

Start

S710

First step of melting aluminum alloy is performed

S720

Second step of casting molten aluminum alloy is performed

S730

Third step of solution treating cast aluminum alloy is performed

End

# FIG. 7

FIG. 8

Europäisches
Patentamt

European
Patent Office

Office européen
des brevets

## EUROPEAN SEARCH REPORT

**Application Number**

EP 25 18 0323

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 277588 A (FURUKAWA SKY KK) 25 October 2007 (2007-10-25) | 1,2,6-15 | INV. C22C21/00 |
| A | * paragraphs [0001], [0002], [0029]; claims 1-3; tables 1,2 * | 3-5 | C22F1/04 H01M50/119 |
| | ----- | | C22C1/02 |
| X | JP 2001 131666 A (SKY ALUMINIUM) 15 May 2001 (2001-05-15) | 1-14 | H01M50/342 |
| A | * paragraphs [0001], [0006], [0011], [0012], [0017] - [0023]; claims 1-6; tables 1,2 * | 15 | |
| | ----- | | |

**TECHNICAL FIELDS SEARCHED (IPC)**

C22C
H01M
C22F

The present search report has been drawn up for all claims

| Place of search | Date of completion of the search | Examiner |
|---|---|---|
| The Hague | 7 November 2025 | Rausch, Elisabeth |

EPO FORM 1503 03.82 (P04C01)

## ANNEX TO THE EUROPEAN SEARCH REPORT
## ON EUROPEAN PATENT APPLICATION NO.

EP 25 18 0323

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | | Publication date |
|---|---|---|---|---|---|
| JP 2007277588 | A | 25-10-2007 | JP | 5000917 B2 | 15-08-2012 |
| | | | JP | 2007277588 A | 25-10-2007 |
| JP 2001131666 | A | 15-05-2001 | JP | 3860939 B2 | 20-12-2006 |
| | | | JP | 2001131666 A | 15-05-2001 |

EPO FORM P0459

For more details about this annex : see Official Journal of the European Patent Office, No. 12/82